# EUROPEAN PATENT APPLICATION

(11) **EP 1 276 069 A1**
(43) Date of publication of application: **15.01.2003**
(21) Application number: 02251127.3
(22) Date of filing: 19.02.2002
(51) Int. Cl.: G06F 17/60

(54) **Method and system for assisting application preparation**

(30) Priority: 12.07.2001 JP 2001212365
(71) Applicant: Hitachi, Ltd., Chiyoda-ku, Tokyo (JP)
(72) Inventor: Seki, Yumiko, Hitachi, Ltd., Chiyoda-ku, Tokyo 100/8220 (JP); Nagata, Mitsuhiro, Hitachi, Ltd., Chiyoda-ku, Tokyo 100-8220 (JP)
(74) Representative: Calderbank, Thomas Roger

(57) **Abstract**

A method and system for assisting application preparation are provided for assisting in preparing an application for making a document-based application to a public organization. A world-wide standard reference unit (201) acquires and utilizes information on a world-wide standard (102) which defines contents that should be described in the application. A country-based published information reference unit (203, 205) acquires and utilizes information (103, 104, 105) on a standard unique to each country which is defined in detail in conformity to the world-wide standard, and information on published applications and examinations unique to each country. A document preparation management assisting unit (208) assists in preparing application documents (107) based on the acquired information on the world-wide standard, information on the standard unique to each country, and information on the application and examination.

## Description

The present invention relates to a method and system for assisting application preparation, and more particularly, to a method and system for assisting application preparation for assisting the preparation of application documents for making a document-based application to a public organization.

A technique described, for example, in JP-11-328288 or the like is known as a prior art technique related to the assistance for application preparation. This prior art relates to a system for collectively managing a variety of slips, even if the slips for application procedures require different formats, to permit efficient procedures for a variety of applications. Specifically, the system searches a database which stores data related to a variety of slips for a slip for use in a required application procedure in response to a request from a user, and assists the user in operations involved in filling required items in associated fields on the slip, and submitting the completed slip.

Another known prior art technique permits the user to manually specify pertinent document data for association such that the user prepares an application which complies with a predefined application format in the United States of America or some of European countries.

In recent years, activities have been promoted in the pharmaceutical industry and the like, for defining a variety of application documents related to drugs as a world-wide standard, and separately providing local criteria in each country. Also, the acceptance of a variety of documents through electronic applications in the government and public organizations tends to spread not only in the pharmaceutical industry but also in other business fields. Further, due to reorganization of enterprises within an industry, it is not unusual that an enterprise belonging to a certain country makes the same application in other countries. Then, like the drugs, it is often the case that a drug which has previously accepted a permission in an advanced country is often applied again in other countries.

While the foregoing prior art techniques can alleviate to some degree the effort of the operator in preparing an application under the situation as mentioned above, they have the following problems. The prior art techniques are incapable of alleviating the effort of preparing applications in different formats, even with the same contents, from one country to another or from one public organization to another. Also, since they encounter difficulties in reusing data on previously permitted applications, the operator must newly prepare an application again each time an application is made.

It is an object of the present invention to provide a method and system for assisting application preparation which may address the problems inherent in the prior art techniques, and is capable of capturing information on standards of applications, examination criteria and the like, determined by each country and each organization, to assist in preparing applications which comply with such standards.

It is another object of the present invention to provide a method and system for assisting application preparation which is capable of referencing information on application documents which have already been applied to or permitted by a certain country or organization to reuse data included in the documents and assisting in conveniently preparing an application for another country or organization.

It is a further object of the present invention to provide a method and system for assisting application preparation which is capable of storing a log of operation procedures created by the application preparation assisting system of the present invention to readily provide viewable information as audit data at some later time.

According to the present invention, the foregoing objects are achieved in an application preparation assisting method for assisting in preparing an application for making a document-based application to a public organization by acquiring information on a world-wide standard which defines contents that should be described in the application, acquiring information on a standard unique to each country which is defined in detail in conformity to the world-wide standard, and information on published application and examination unique to each country, and assisting in preparing application documents based on the acquired information on the world-wide standard, information on the standard unique to each country, and information on the application and examination.

Also, the foregoing objects are achieved in an application preparation assisting system for assisting in preparing an application for making a document-based application to a public organization, by comprising means for acquiring and utilizing information on a world-wide standard which defines contents that should be described in the application, means for acquiring and utilizing information on a standard unique to each country which is defined in detail in conformity to the world-wide standard, and information on published application and examination unique to each country, and means for assisting in preparing application documents based on the acquired information on the world-wide standard, information on the standard unique to each country, and information on the application and examination.

### IN THE DRAWINGS

Fig. 1 is a diagram for explaining an outline of general activities for use with a system for assisting application preparation according to one embodiment of the present invention;
Fig. 2 is a block diagram illustrating the configuration of the system for assisting application preparation according to one embodiment of the present invention;
Fig. 3 is a diagram showing an example 301 of a reference document specifying screen;
Fig. 4 is a diagram showing an example of a screen for converting a reference document to a document for a country to which an application is made;
Fig. 5 is a flow chart for explaining the processing operation for converting a reference document to a document for a country to which an application is made;
Fig. 6 is a diagram showing an example of a screen for automatically converting a reference document to an application defined by a country B;
Fig. 7 is a diagram showing an example of an application processing confirmation screen;
Fig. 8 is a flow chart for explaining the processing operation for an examination content confirmation unit to confirm whether or not any description violates examination criteria in the country B;
Fig. 9 is a diagram showing an example of a data matching screen for changing contents described in an application;
Fig. 10 is a flow chart for explaining the processing operation in a document data matching unit; and
Fig. 11 is a diagram showing an example of an application submission screen.

In the following, an embodiment of a method and system for assisting application preparation according to the present invention will be described in detail with reference to the drawings.

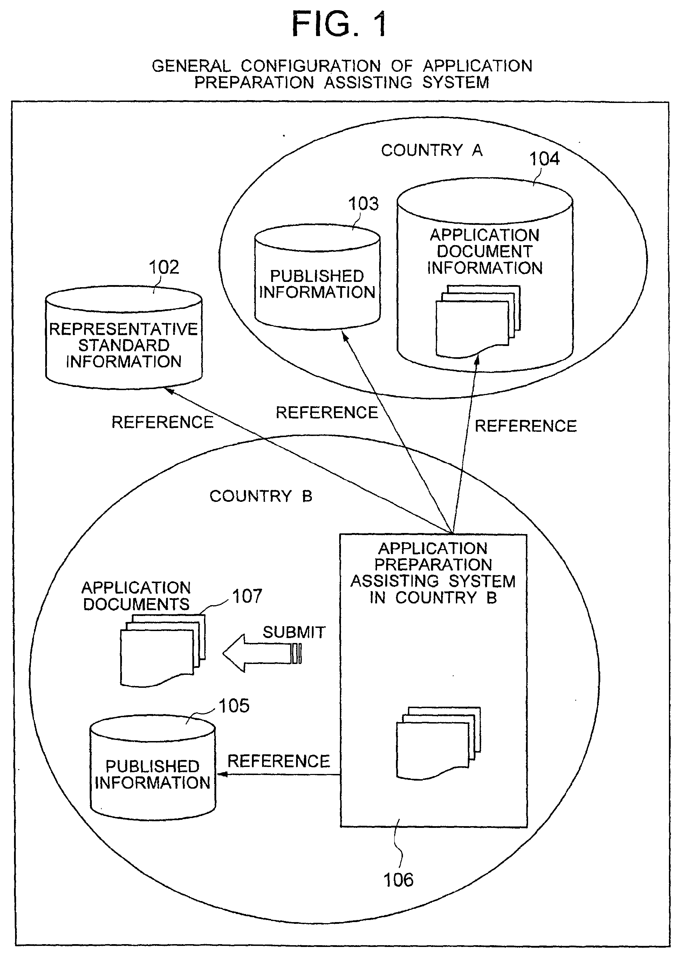

Fig. 1 is a diagram for explaining an outline of general activities for use with the system for assisting application preparation according to one embodiment of the present invention. In Fig. 1, the illustrated general configuration comprises a world-wide standard information database 102; published information databases 103, 105; application document information 104, 107; and an application preparation assisting system 106. The example illustrated in Fig. 1 may be applied to the preparation of application documents for a plurality of countries or public organizations, wherein referring to contents of documents applied to an organization in one country, an organization in a country A, in the illustrated example, the system assists in preparing documents applied to an organization in another country, a country B in the illustrated example. Also, while the example illustrated in Fig. 1 assumes that the countries A, B are separate independent countries, they may be different public organizations in the same country.

In Fig. 1, the world-wide standard information database 102 is a database which accumulates information related to globally world-wide standards managed by a public organization in a third country or the like, including the countries A, B (also including public organizations in the respective countries). While the application preparation assisting system 106 is shown to be installed in the country B, it may be installed in the country A or any other country. Then, the database 102 which accumulates information related to the globally world-wide standards managed by the public organization in the third country or the like, and the application preparation assisting systems 106 installed in a plurality of countries are interconnected through a network such as the Internet, a public communication path or the like.

In an environment in which the application preparation assisting system is used as illustrated in Fig. 1 described above, assume now that application documents are prepared with reference to world-wide standard information within the world-wide standard information database 102 and published information within the published information database 103 defined in the country A, and are accumulated as application document information 104. The published information 103 defined in the country A may be information on standards, formats of applications, mode, language, application procedure, examination criteria and the like which are uniquely determined by the country A, in addition to the world-wide standard. The prepared application documents may be prepared under the assistance of an application preparation assisting system, not shown in Fig. 1, which is installed in the country A, or may be prepared under the assistance of the shown application preparation assisting system 106 installed in the country B which may be accessed through the network. In preparing the application documents, the application preparation assisting system acquires published information within the published information database 103 through the network, preserves the acquired information as internal data, and updates the preserved information for utilization at a predefined timing. Here, the prepared application document information 104 may be documents under preparation by the application preparation assisting system, or may be information which has already been applied and accepted, or information which has been permitted as a result of an examination after the application. The permitted information may be published as the published information 103 in some cases.

Next, description will be made on the preparation of application documents for the country B by referring to the application document information 104 prepared in the country A, and reusing data in the referenced information. As is the case with the country A, in the country B, application documents 107 for the country B are prepared with reference to the published information 105 in the country B. In this event, the application preparation assisting system 106 references the application document information 104 in the country A to prepare the application documents 107 using a method of reusing data in the information, instead of a method of newly preparing the application documents. The application documents 107 thus prepared by utilizing the application preparation assisting system 106 in the country B are submitted electronically or in a document form to a public organization of interest in the country B.

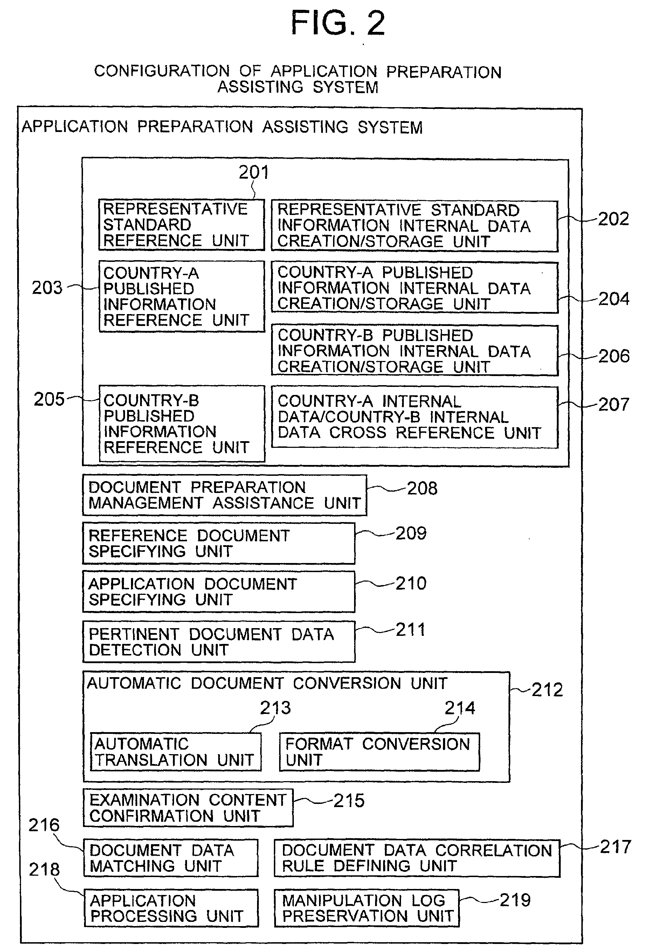

Fig. 2 is a block diagram illustrating the configuration of the application preparation assisting system 106. In the following, the configuration of the system will be described. In Fig. 2, the system 106 comprises a world-wide standard reference unit 201; a world-wide standard information internal data creation/storage unit 202; country-based published information reference units 203, 205; country-based published information internal data creation/storage units 204, 206; a country-based internal data cross reference unit 207; a document preparation management assisting unit 208; a reference document specifying unit 209; an application document specifying unit 210; a pertinent document data detection unit 211; an automatic document conversion unit 212; an automatic translation unit 213; a format conversion unit 214; an examination content confirmation unit 215; a document data matching unit 216; a document data correlation rule defining unit 217; an application processing unit 218; and an manipulation log preservation unit 219.

The application preparation assisting system 106 is comprised of the components as illustrated in Fig. 2, and each of the components is configured to permit mutual communications of information as required. First, each of the components will be generally described.

The world-wide standard reference unit 201 is provided for referencing the globally world-wide standard information, and information acquired by the reference unit 201 is recast as internal data and stored in the world-wide standard information internal data creation/storage unit 202. The country-A published information reference unit 203 references published information in the country A, and information acquired by the reference unit 203 is recast as internal data and stored in the country-A published information internal data creation/storage unit 204. Likewise, the country-B published information reference unit 205 references published information in the country B, and information acquired by the reference unit 205 is recast as internal data and stored in the country-B published information internal data creation/storage unit 206. The country-A internal data/country-B internal data cross reference unit 207 compares application document information in the country A with application document information in the country B.

The document preparation management assisting unit 208, which assists for preparing application documents, can use an existing document management system. The reference document specifying unit 209 specifies application document information to be referenced (in the example herein described, the application document information in the country A). The application document specifying unit 210 specifies specifying conditions associated with application documents to be prepared. The pertinent document data detection unit 211 confirms the existence of data which can be reused under conditions specified by the reference document specifying unit 209 and application document specifying unit 210, and provides such data, if any, to the user.

The automatic document conversion unit 212 applies conversion processing for the country B to reusable data detected by the pertinent document data detection unit 211. For this purpose, the automatic document conversion unit 212 is comprised, for example, of the automatic translation unit 213 for translating the language, the format conversion unit 214 for converting a format, and the like.

The examination content confirmation unit 215 is a functional unit for previously checking whether or not prepared documents include items which violate the examination criteria. Assume herein that the prepared documents include a description which does not comply with the examination criteria defined in the country B. In this event, the document data matching unit 216 replaces pertinent data for the portion of description which does not comply with the examination criteria to match the documents to the examination criteria. In this event, the document data matching unit 216 utilizes information on a correlation between respective data for matching, which is previously defined in the document data correlation rule defining unit 217.

The application processing unit 218 executes electronic application processing for the application documents after the examination content confirmation unit 215 confirms that the application documents do not violate the examination criteria. The application documents may be preserved for utilization in an application at a later time, or may be printed for submission.

The manipulation log preservation unit 219 can preserve an entire log of manipulations performed on the system for preparing the application documents as mentioned above for viewing as information for audit or the like at a later time.

Next, the activities of the foregoing main components will be described with reference to examples of displayed screens and manipulation procedures on the screens.

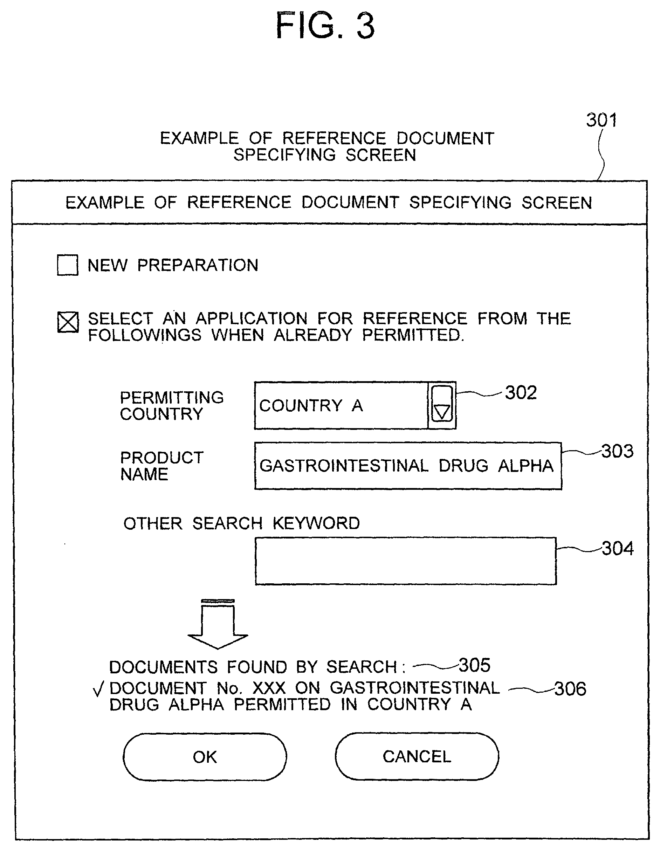

Fig. 3 is a diagram showing an example 301 of a reference document specifying screen. In this example, assume for purposes of explanation that reference is made to application documents for the country A which have previously applied and permitted. First, a permitting country is selected with a selection button 302, and a keyword is entered in an article name entry field 303 or a search keyword entry field 304 for searching documents. Assume in this example that the article name is known, and the article name "gastrointestinal drug Alpha" has been entered in the entry field 303. As a result of search (in the figure, the progress of the search is indicated by the arrow), a search result 306, which can be referenced, is displayed in a document 305 found by the search. Since "Document No. XXX on Gastrointestinal Drug Alpha Permitted in Country A" is displayed as a document which can be referenced in the search result 306, the user can identify the referenced document by selecting this and pressing OK.

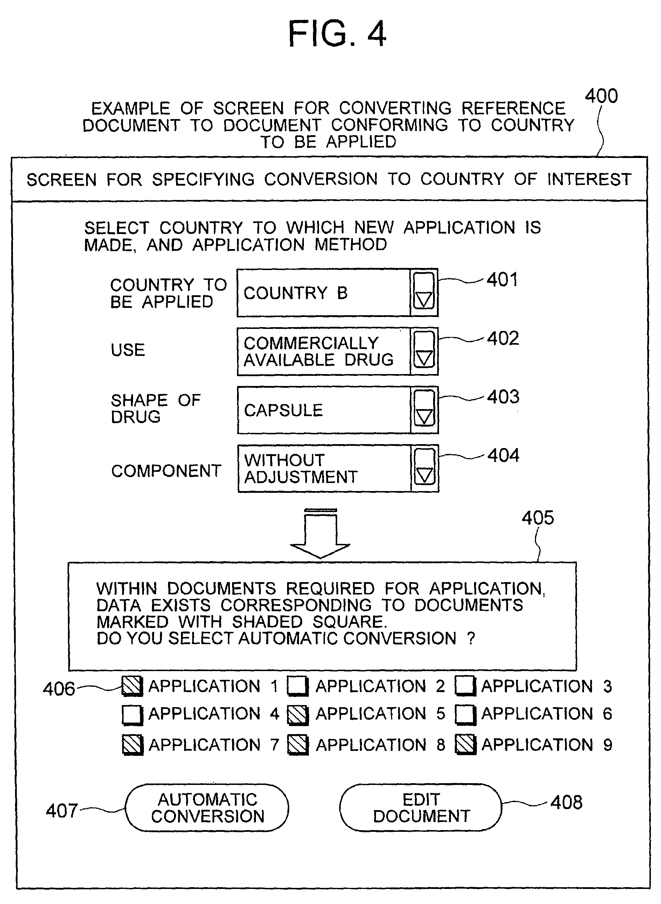

Fig. 4 is a diagram showing an example 400 of a screen for converting a reference document to that conforming to a country to which an application is to be made. Here, the user has selected an application to the country B with a selection button 401, and specified an application with a selection button 402. This example relates to a commercially available drug. The user also selects a capsule as the shape of the drug with a selection button 403, and selects "not adjusted" for components with a selection button 404. Instructions are made to prompt the user to select a plurality of application methods, other than the country name, as mentioned above, because application documents may differ in the type, number, contents and the like in accordance with detailed application conditions such as the use, shape of drug, change in components, and the like, depending on the type of industry associated with the application. As the user has specified required conditions, the presence or absence of reusable data, and information 405 on required application documents are displayed from the previously identified referenced documents.

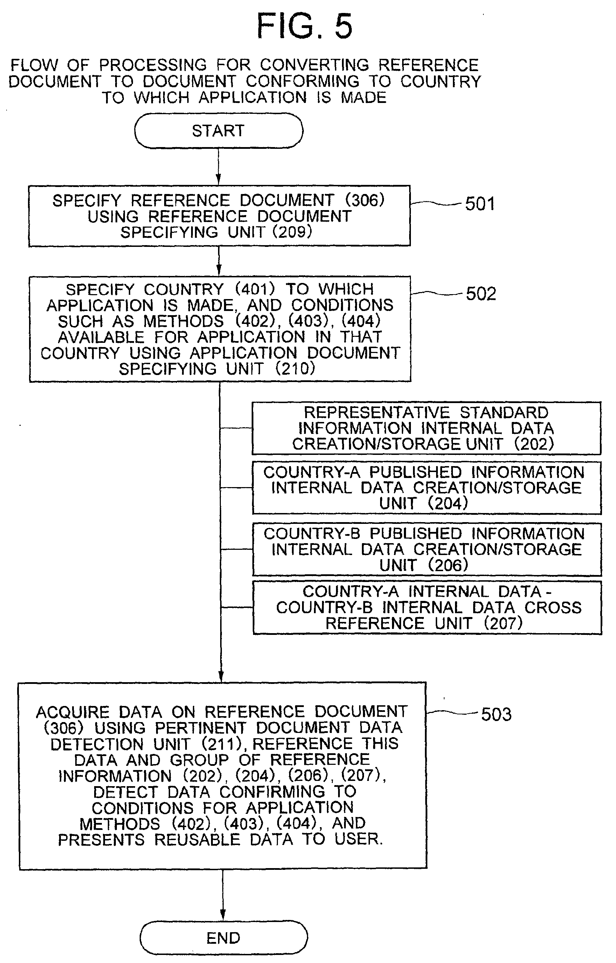

Fig. 5 is a flow chart for explaining the processing operation for converting an application document to that conforming to a country to which an application is made. In the following, the processing operation will be explained.
(1) First, the reference document specifying unit 209 prompts the user to specify a document 306 to be referenced. Manipulations for specifying the document are performed as previously described in connection with Fig. 3 (step 501).
(2) Next, the application document specifying unit 210 prompts the user to specify a country 401 to which the application is made, and conditions such as the use 402, shape of drug 403, components 404 and the like, as methods which can be specified in that country. The manipulations for specifying are performed as previously described in connection with Fig. 4 (step 502).
(3) The pertinent document data detection unit 211 acquires data on the reference document 306 for a document specified by the previously described manipulations and resulting processing, references each data in the world-wide standard information internal data creation/storage unit 202, country-A published information internal data creation/storage unit 204, country-B published information internal data creation/storage unit 206, and country-A internal data/country-B internal data cross reference unit 207, detects data which satisfies the conditions on the use 402, shape of drug 403, and components 404 that are to be applied in the country 401 to which the application is made, as described in connection with Fig. 4, and provides the user with reusable data (step 503).

In the exemplary screen 400 described in connection with Fig. 4, the result presented at the foregoing step 503 states that application 1 - application 9 are required for the application, and reusable reference data exist for application 1, application 5, application 7, application 8 and application 9. Here, the user selects whether an automatic conversion is performed for required documents (407) or the user manually edits them (408), followed by a transition to the next procedure. Here, the description continues on the assumption that the automatic conversion 407 is selected. For manually editing the required documents, an existing document editing function may be used.

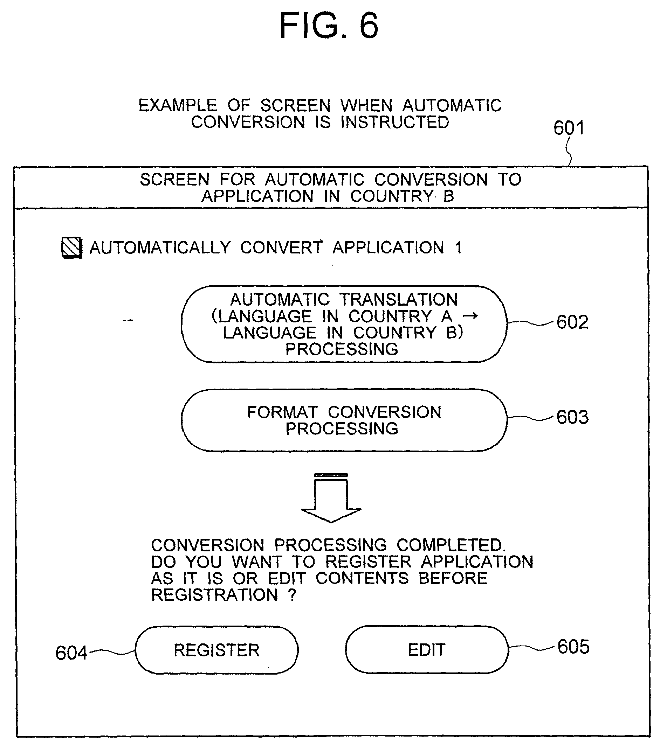

Fig. 6 is a diagram showing an exemplary automatic conversion screen 601 for conversion to an application conforming to the country B when the automatic conversion is specified. For automatically converting the application 1, an automatic translation program is started at 602 to translate from a language in the country A to a language in the country B. Also, a format conversion processing program is started at 603 to automatically convert a format for the country A to a format for the country B. After the conversion has been made, a selection is made as to whether the converted contents are stored as they are (604) or further manually edited (605), followed by termination of the processing. Similar processing is repeated for each application, and the processing proceeds to an application processing confirmation screen at the time all of document 1 - document 9 required for the application to the country B have been prepared.

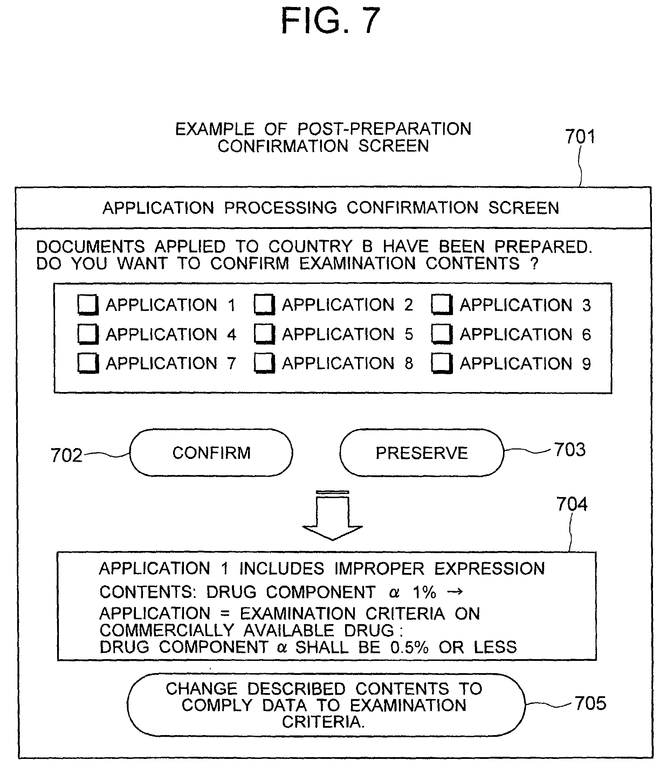

Fig. 7 is a diagram showing an example 701 of the application processing confirmation screen which is displayed at the time all of the document 1 - document 9 required for the application to the country B have been prepared. As displayed on the example 701 of the application processing confirmation screen, assume that all of application 1 - application 9 have been prepared. Here, the user selects whether processing for confirming the examination contents is executed or processing for preserving the examination contents and confirming them at a later time with a confirmation button 702 or a preservation button 703. Assume herein that the user selects the confirmation button 702. This selection causes the examination content confirmation unit 215 to confirm whether or not each application document includes any description which violates the examination criteria in the country B.

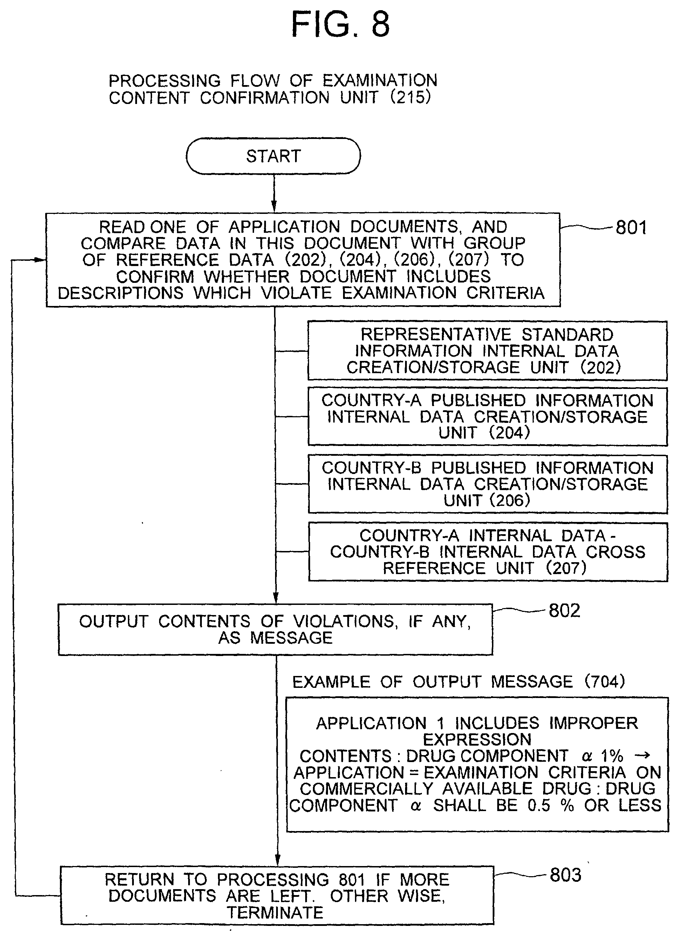

Fig. 8 is a flow chart for explaining the processing operation performed by the examination content confirmation unit to confirm whether or not any description violates the examination criteria in the country B. In the following, this processing operation will be explained along the flow chart.
(1) One of the application documents is read, and the document data is compared with each data in the world-wide standard information internal data creation/storage unit 202, country-A published information internal data creation/storage unit 204, country-B published information internal data creation/storage unit 206, and country-A internal data/country-B internal data cross reference unit 207 to confirm whether or not there are descriptions which violate the examination criteria (step 801).
(2) If a violation is found in the processing at step 801, the contents of the violation are outputted as a message. Assume herein, for example, that a violation is found in a description in application 1. Then in the shown example, outputted as a message 704 are the contents indicating that a permission could be accepted in the country A even if 1 % of a component called "pharmaceutical component α" is included, whereas any commercially available drug cannot be accepted according to the examination criteria in the country B unless the component called "pharmaceutical component α" is equal to or less than 0.5 % (step 802).
(3) After completing the foregoing processing for one application, a check is made as to whether or not more documents (applications) remain, and the processing returns to step 801 to continue the processing for confirming the contents of the next document, if any. If no document remains, the processing is terminated (step 803).

The message 704 outputted in the processing at step 802 is displayed as shown in the exemplary display screen shown in Fig. 7. When a message is outputted to indicate that an improper expression is included in application 1, the user performs processing for changing the described contents in application 1 to match data (705).

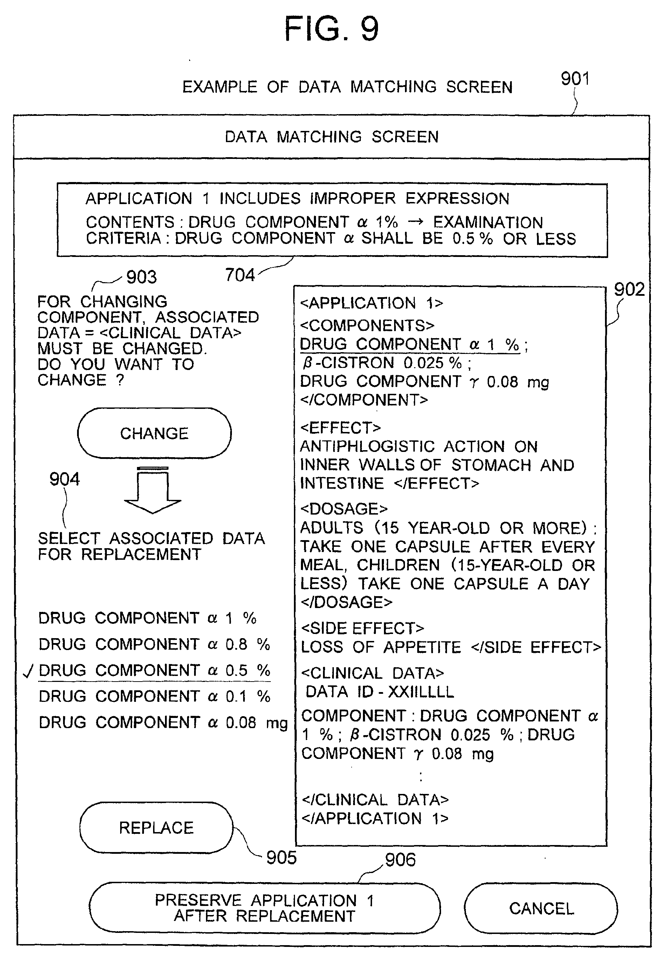

Fig. 9 is a diagram showing an example of a data matching screen for changing described contents of an application. In the example shown in Fig. 9, since it has been found that application 1 includes an improper description, data 902 on application 1 is displayed in the displayed screen. Then, the data on the application 1 is displayed with the improper portion of the description underlined. When component data of concern is changed in accordance with the document data correlation rule defining unit 217, a group of data associated therewith must be changed as well. An example of outputting this as a message is displayed as shown at 903.

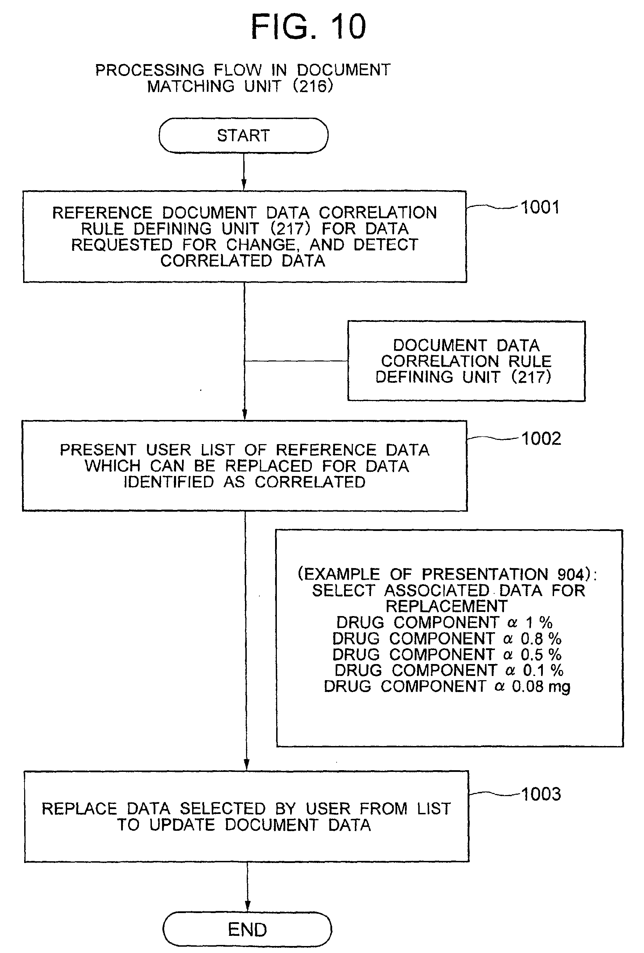

Fig. 10 is a flow chart for explaining the processing operation in the document data matching unit. In the following, this processing operation will be explained along the flow chart.
(1) Since application 1 includes a description which violates the examination criteria, correlated data is detected for data which is requested for a change with reference to the document data correlation rule defining unit 217 (step 1001).
(2) A list of a group of replaceable reference data is presented to the user in regard to data identified as correlated. Such a group of reference data can be acquired from the A-country application document information 104. In the example shown in this figure, 1 %, 0.8 %, 0.5 %, 0.08 mg of the pharmaceutical component α, and the like are illustrated as a group of reusable reference data (step 1002).
(3) The user selects data from the list presented in the foregoing manner, and replaces with this data to update the document data (step 1003).

Turning back to the exemplary display screen shown in Fig. 9, this example shows that when component data is changed, clinical data associated therewith must be changed. Accordingly, as the user changes the associated data, a group of replaceable associated data is displayed as 904. This exemplary screen shows, for example, that clinical data exist respectively when 1 %, 0.8 %, 0.5 %, 0.1 % and 0.08 mg of pharmaceutical component α are used, as clinical data which are associated data, and the user selects desired data for replacement. Since the criteria in the country B determines that a commercially available drug shall include 0.5 % or less of pharmaceutical component α, the user selects 0.5 % of pharmaceutical component α, and also replaces the clinical data with such data that is derived when 0.5 % of pharmaceutical component α is used, with a replacement button 905. This replacement results in replacement of all associated data to ensure the matching of data within the application. Finally, the user selects whether or not application 1 after the replacement is preserved or not with a button 906. After terminating the confirmation for all the applications, the processing proceeds to manipulations for submitting the applications.

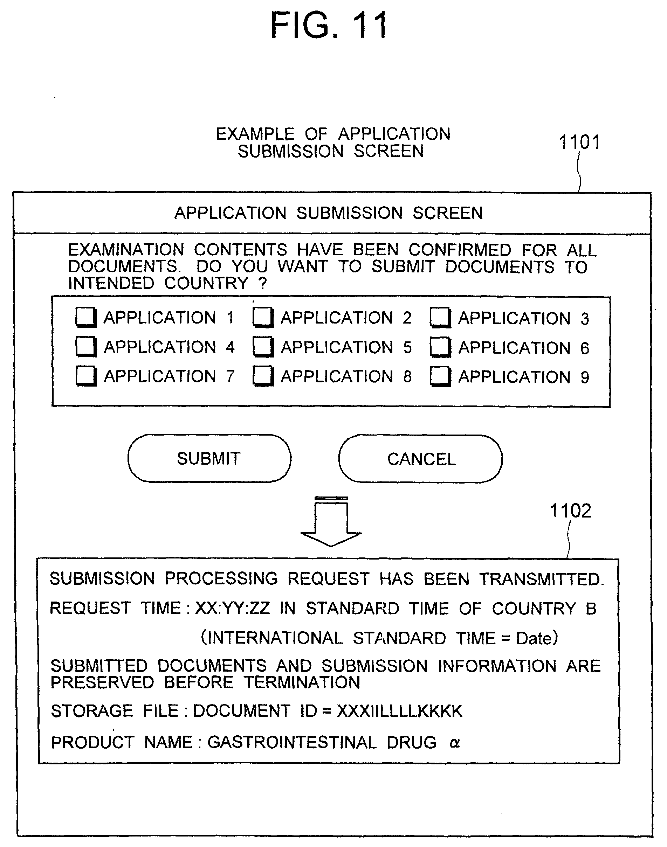

Fig. 11 is a diagram showing an example 1101 of an application submission screen. The exemplary screen shown in Fig. 11 is displayed after confirming that the confirmation has been terminated for the examination contents for all the application documents, and the user selects whether or not the applications are immediately submitted in this state, or the applications are canceled and preserved for an application at a later time. Here, description continues on the assumption that the user selects to submit the applications. The application processing unit 218 outputs the processing result as a message 1102, shown in the figure, when an electronic application is processed to submit the applications. In the example of this figure, the processing result records an application request hour within the country B, and a request time converted into the international standard time, and information on the submitted documents and submission time (all information utilized for the application, such as an updated date and the like of reference information) is preserved. The application documents are stored as a document file, in which case the document file is assigned XXXIILLLLKKKK as a document ID. The product name in the country B is "gastrointestinal drug α." Here, information inherent in the country B such as the product name can be freely determined by the user as a document attribute, by utilizing an existing document management system.

In the embodiment of the present invention described above, referring to information on application documents which have previously been applied and permitted, data included in the documents is reused to conveniently prepare an application to another country. The present invention is also capable of fetching information on standards, examination criteria and the like, individually determined in a plurality of country, together with the globally world-wide standard to assist in newly preparing an application which complies with such information.

In the foregoing embodiment of the present invention, a variety of processing executed in the application preparation assisting system 106 can be implemented as a program executable by a processing unit within a computer system. Also, the processing program can be stored and provided in a portable recording medium such as a magnetic disk, an optical disk and the like.

As described above, according to the embodiment of the present invention, it is possible to fetch information on standards, examination criteria and the like, individually determined in a plurality of country, together with the globally world-wide standard, and to prepare an application which complies with such information. Also, according to the embodiment of the present invention, referring to information on application documents which have previously been applied and permitted, data included in the documents is reused to conveniently prepare an application to another country. Further, according to the embodiment of the present invention, since it is possible to store a log of a manipulation procedure created by the application preparation assisting system according to the embodiment of the present invention, information can be readily provided so that it can be viewed as audit data at a later time.

As described above, according to the present invention, the application preparation assisting system can assist in newly preparing an application which complies with information on the standard, examination criteria and the like determined in each country, or in reusing data included in application documents which have been previously applied or permitted in a certain country to conveniently prepare an application to another country.

Also, since the present invention stores the log of manipulation procedure for preparing an application, it is possible to readily provide information which can be viewed as audit data at a later time.

It should be further understood by those skilled in the art that the foregoing description has been made on embodiments of the invention and that various changes and modifications may be made in the invention without departing from the spirit of the invention and the scope of the appended claims, as interpreted by the description and drawings.

## Claims

1. An application preparation assisting method for assisting in preparing an application for making a document-based application to a public organization, comprising the steps of:
acquiring information on a world-wide standard (102) which defines contents that should be described in said application;
acquiring information (103) on a standard unique to each country which is defined in detail in conformity to said world-wide standard, and information on published applications and examinations unique to each country; and
assisting in preparing application documents (107) based on said acquired information on the world-wide standard, information on the standard unique to each country, and information on the application and examination.

2. An application preparation assisting method according to claim 1, further comprising:
preparing and converting the application documents for a certain country to comply with an application format or examination conditions in said country.

3. An application preparation assisting method according to claim 1, further comprising:
acquiring information (104) on documents which have been applied in a certain country, and information on documents which have accepted permission from said country as a result of examinations after application; and
assisting in preparing an application for another country with reference to said information on the documents.

4. An application preparation assisting method according to claim 1, further comprising:
electronically submitting the prepared application documents to perform electronic application processing.

5. An application preparation assisting method according to claim 1, further comprising:
recording an entire manipulation procedure of an operator for preparing an application with the assistance of application preparation as log information so that the log information can be viewed at a later time.

6. An application preparation assisting system (106) for assisting in preparing an application for making a document-based application to a public organization, comprising:
means (201) for acquiring and utilizing information on a world-wide standard (102) which defines contents that should be described in said application;
means (203, 205) for acquiring and utilizing information (103, 104, 105) on a standard unique to each country which is defined in detail in conformity to said world-wide standard, and information on published applications and examinations unique to each country; and
means (208) for assisting in preparing application documents (107) based on said acquired information on the world-wide standard, information on the standard unique to each country, and information on the application and examination.

7. An application preparation assisting system according to claim 6, further comprising:
means (208, 212) for preparing and converting the application documents for a certain country to comply with an application format or examination conditions in said country.

8. An application preparation assisting system according to claim 6, further comprising:
means (203, 204) for acquiring information (104) on documents which have been applied in a certain country, and information on documents which have accepted permission from said country as a result examinations after application,
wherein said means for assisting in preparing application documents prepares an application for another country with reference to said information on the documents.

## Amended claims

### Amended claims in accordance with Rule 86(2) EPC.

**9.** A method for preparing an application by use of a computer, comprising the steps of:
recasting (202) standard information into first internal data and storing in a first storage unit;
recasting (204) published information into second internal data and storing in a second storage;
confirming (211) among said second internal data stored in said second storage existence of data which can be reused under a predetermined condition;
providing (211), said data which can be reused, if any, to the user; and
converting (212) said data which can be reused into third internal data, said converting step including steps of translating said data which can be reused into a language different from language of said second internal data and converting a format of said data which can be reused.

**10.** A program for preparing an application by use of a computer which, when executed on said computer, carries out a method according to claim 9.

**11.** A method for preparing an application by use of a computer, comprising the steps of:
converting (601) a first application of a first language to a second application in response to a user's selection; and
translating (602) said first application into a second language and converting (603) a first format of said first application to a second format.

**12.** A program for preparing an application by use of a computer which, when executed on said computer, carries out the method of claim 11.
